# EUROPÄISCHE PATENTSCHRIFT

(11) **EP 1 002 698 B1**
(45) Veröffentlichungstag und Bekanntmachung des Hinweises auf die Patenterteilung: **07.12.2005**
(21) Anmeldenummer: 99120785.3
(22) Anmeldetag: 20.10.1999
(51) Int. Cl.: B60R 11/06, E05B 5/00, E05B 1/00

(54) **Verschlussvorrichtung für Abdeckung**
Closing device for a cover
Dispositif de fermeture pour un couvercle

(30) Priorität: 18.11.1998 DE 19853245
(43) Veröffentlichungstag der Anmeldung: 24.05.2000
(73) Patentinhaber: Intier Automotive Näher GmbH, 71706 Markgröningen (DE)
(72) Erfinder: Kobiela, Andreas, 70563 Stuttgart (DE); Pestke, Joachim, 71732 Tamm (DE); Klettner, Josef, 71101 Schönaich (DE)
(74) Vertreter: Patentanwälte Ruff, Wilhelm, Beier, Dauster & Partner

(56) Entgegenhaltungen:
- EP-A- 0 713 806
- DE-A- 19 716 409
- JP-A- 8 270 273
- JP-A- 8 270 274

## Beschreibung

Die vorliegende Erfindung betrifft eine Verschlußvorrichtung zum Sichern einer Abdekkung, z.B. einer Klappe oder eines Deckels, an einer Basisverkleidung, z.B. der Karosserie eines Kraftfahrzeugs oder einer Tür in der Möbelindustrie, und eine Abdeckung mit dieser Verschlußvorrichtung.

Zum Befestigen einer Klappe an einem Karosserieblech eines Kraftfahrzeugs, z.B. in dessen Kofferraum, sind einfache einteilige Drehverschlüsse bekannt, deren sichere Schließfunktion mangels genauer Ausrichtung des Verschlusses relativ zur Klappe oder Abdeckung und zur Karosserie meist vom Benutzer überprüft werden muß. Auch das Öffnen der bekannten Verschlußvorrichtungen bereitet wegen ihres möglichen Verklemmens aufgrund vorher unsachgemäßen Verschließens oftmals Probleme. Derartige Lösungen beinhalten viele aufwendige Bauteile, was hohe Kosten zur Folge hat.

Die JP 08270274 A zeigt eine Verschlussvorrichtung zum Sichern einer Abdeckung an einer Basis mit einer Anbringungseinrichtung zum Anbringen der Verschlussvorrichtung an der Abdeckung, einer bewegbaren Arretiereinrichtung, die mit der Anbringungseinrichtung gekoppelt ist, zum Sichern der Abdeckung an der Basis in einer Arretierposition, und einer Stelleinrichtung, die an der Anbringungseinrichtung angebracht und relativ zur Anbringungseinrichtung drehbar ist.

Aufgabe der vorliegenden Erfindung ist es, eine Verschlußvorrichtung bzw. eine Abdeckung mit dieser Verschlußvorrichtung anzugeben, die für den Benutzer sowohl beim Schließen als auch beim Öffnen leicht und sicher zu handhaben sind und gleichzeitig ein Minimum an Bauteilen beinhalten, wodurch geringe Herstellungskosten erzielt werden.

Diese Aufgabe wird durch die Verschlußvorrichtung gemäß Anspruch 1 bzw. durch ein System gemäß Anspruch 14 gelöst.

Demnach umfaßt die erfindungsgemäße Verschlußvorrichtung zum Sichern einer Abdekkung an einer Basis eine Anbringungseinrichtung zum Anbringen der Verschlußvorrichtung an der Abdeckung, eine bewegbare Arretiereinrichtung, die mit der Anbringungseinrichtung gekoppelt ist, zum Sichern der Abdeckung an der Basis in einer Arretierposition, und eine Stelleinrichtung, die an der Anbringungseinrichtung angebracht und relativ zur Anbringungseinrichtung drehbar ist, mit der Arretiereinrichtung bewegungsmäßig gekoppelt ist und, wenn die Stelleinrichtung gedreht wird, die Arretiereinrichtung bewegt, um die Arretiereinrichtung aus der Arretierposition in eine Freigabeposition zu bewegen, in der die Abdeckung von der Basis entfernt werden kann.

Da die an der Abdeckung fixierte bzw. befestigte Anbringungseinrichtung, die drehbare Stelleinrichtung und die Arretiereinrichtung in ihrer gegenseitigen Lage und Bewegung sowohl beim Schließvorgang als auch beim Öffnen festgelegt sind und damit auch bezüglich der Basis, z.B. der Karosserie, immer ausgerichtet sind, ist eine definierte Schließfunktion oder Öffnungsfunktion gegeben, aus der eine einfache Handhabung und einfache Montage der erfindungsgemäßen Verschlußvorrichtung resultiert.

Die Anbringungseinrichtung, die Stelleinrichtung und die Arretiereinrichtung sind als einstückiges, einteiliges bzw. integrales Spritzgussteil aus Kunststoff hergestellt, wodurch der Herstellungsaufwand gering gehalten wird, da nur ein Kunststoffspritzvorgang erforderlich ist, und die spätere Montage der Verschlussvorrichtung erleichtert wird, da keine Einzelteile zusammengesetzt werden müssen.

Die Arretiereinrichtung ist bevorzugt beweglich an der Anbringungseinrichtung angebracht oder gehaltert, wodurch die gegenseitige Ausrichtung von Anbringungseinrichtung und Arretiereinrichtung verbessert wird und sich zusätzliche Befestigungen an der Basis erübrigen.

Vorzugsweise führt die Arretiereinrichtung für die Schließfunktion und Öffnungsfunktion eine translatorische bzw. lineare Bewegung durch.

Die erfindungsgemäße Verschlußvorrichtung kann eine Feder aufweisen, die die Arretiereinrichtung mit einer Federkraft beaufschlagt. Die Feder ermöglicht eine selbsttätige Bewegung der Arretiereinrichtung in ihre Arretierposition bzw. Schließlage, wodurch immer eine definierte Ausrichtung der Verschlußvorrichtung, nämlich in der Arretierposition, erreicht wird und damit die Handhabung der Verschlußvorrichtung weiter verbessert wird.

Die Feder kann die Arretiereinrichtung in der Arretierposition festhalten, wodurch eine sichere Schließfunktion der erfindungsgemäßen Verschlußvorrichtung auch bei Schwingungsbelastung z.B. im Kraftfahrzeug sichergestellt ist.

Die Feder kann mit einem Ende an der Anbringungseinrichtung gelagert und mit dem anderen Ende an der Arretiereinrichtung gelagert sein, wodurch die selbsttätige Bewegung der Arretiereinrichtung in die Schließposition aufgrund des festgelegten Lagerpunkts an der fixierten Anbringungseinrichtung immer definiert ist.

Die Stelleinrichtung überträgt die Drehbewegung der Anbringungseinrichtung vorzugsweise gegen die Federkraft der Feder auf die Arretiereinrichtung, um die Arretiereinrichtung aus der Arretierposition in die Freigabeposition zu bewegen. Da der Benutzer eine gewisse Kraft beim Öffnen aufbringen muß, weiß er, daß er die Verschlußvorrichtung öffnet, wodurch die Handhabung verbessert wird.

Die Arretiereinrichtung hat vorzugsweise eine Rastnase, die an der Basis einrastbar ist. Das Schließen der erfindungsgemäßen Verschlußvorrichtung wird erleichtert, da der Benutzer z.B. die Klappe nur zufallen lassen muß, damit eine Einrasten oder Einschnappen der Arretiereinrichtung an der Basis erfolgt.

Die Anbringungseinrichtung kann eine Rastnase haben, die an der Abdeckung einrastbar ist. Hierdurch wird eine einfache und sichere Montage der Anbringungseinrichtung an der Abdeckung erreicht.

Die Stelleinrichtung hat vorzugsweise ein Stellglied, das in ständigem Eingriff mit der Arretiereinrichtung ist, wodurch eine immer definierte Bewegung der Arretiereinrichtung ohne Leerlauf erreicht wird.

Das Stellglied ist bevorzugt plattenförmig und hat einen rechteckigen Umriß hat. Diese spezielle Auslegung des Stellglieds ermöglicht, daß sowohl eine Drehung der Stelleinrichtung im Uhrzeigersinn als auch gegen den Uhrzeigersinn die gleiche Verschiebung der Arretiereinrichtung bewirkt, wodurch die Handhabung der erfindungsgemäßen Verschlußvorrichtung weiter erleichtert wird.

Die Stelleinrichtung kann eine kreisförmige, drehbare Scheibe haben, die mit dem Stellglied starr verbunden ist, um eine definierte Drehbewegung des Stellglieds und damit auch der Arretiereinrichtung sicherzustellen.

Die Scheibe kann einen Rand haben, der derart ausgebildet ist, daß er bei eingebauter Verschlußvorrichtung auf der Oberfläche der Abdeckung aufliegt, wodurch eine stets definierte Bewegung der Stelleinrichtung ohne Verkanten oder Verklemmen erreicht wird.

Der Rand der Scheibe kann weiterhin an der Oberfläche der Abdeckung geführt sein, um die exakte Drehbewegung weiter zu verbessern.

Die Scheibe der Stelleinrichtung kann einen Griff für eine manuelle Drehbetätigung der Stelleinrichtung haben, um die Handhabung der erfindungegemäßen Verschlußvorrichtung weiter zu erleichtern.

Die Arretiereinrichtung kann eine Öffnung haben, in die das Stellglied der Stelleinrichtung eingreift, wobei sich die Öffnung in Richtung der translatorischen Bewegung der Arretiereinrichtung für eine Länge ertreckt, die dem maximalen Bewegungshub der Arretiereinrichtung entspricht. Hierdurch wird ein effizienter Aufbau für die Umsetzung der Drehbewegung der Stelleinrichtung in die Linearbewegung der Arretiereinrichtung erreicht.

Die Stelleinrichtung ist nach dem Spritzguß vorzugsweise mittels eines Filmscharniers mit der Anbringungseinrichtung verbunden ist. Das dünne Filmscharnier sorgt dafür, daß die erfindungsgemäße Verschlußvorrichtung einstückig hergestellt werden kann, und bricht durch einen manuellen Druck oder durch eine Vorrichtung aufgebrachten, wenn die Verschlußeinrichtung montiert wird.

Die Arretiereinrichtung ist mit der Anbringungseinrichtung bevorzugt mittels eines flexiblen Verbindungsmittels, z.B. einem Filmscharnier aus Kunststoff verbunden, wodurch Einzelkomponenten vermieden werden und insbesondere die Montage der Verschlußeinrichtung an der Abdeckung erleichtert wird.

Die Rastnase der Anbringungseinrichtung kann nach dem Einrasten an der Abdeckung durch ein Sperrteil derart arretiert werden, daß eine Auslenkung der Rastnase verhindert wird, damit die Anbringungseinrichtung nicht mehr entfernt werden kann und immer an der Abdeckung fixiert ist.

Die Feder der erfindungsgemäßen Verschlußvorrichtung besteht bevorzugt aus Metall, wodurch im Vergleich zu einer Feder aus Kunststoff einer Verformung oder Ermüdung durch die z.B. im Automobil vorkommenden, relativ hohen Temperaturen von bis zu 90°C vorgebeugt wird und folglich die Funktion der Verschlußvorrichtung sichergestellt ist.

Das erfindungsgemäße System nach Anspruch 14 weist eine Abdeckung, insbesondere eine Klappe oder einen Deckel zur Verwendung in einem Kraftfahrzeug, und mindestens eine Verschlussvorrichtung nach einem der Ansprüche 1 bis 13 auf, wobei die Abdeckung mindestens eine Öffnung zum Anbringen zumindest einer Verschlussvorrichtung hat.

Die Anbringungseinrichtung der Verschlußeinrichtung und die Abdeckung können einstükkig ausgebildet sein, um die Monatge der Verschlußeinrichtung an der Abdeckung zu vereinfachen und den Herstellungsaufwand weiter zu vermindern.

Aus diesen Gründen ist es auch vorteilhaft, wenn die Abdeckung, die Anbringungseinrichtung, die Stelleinrichtung und die Arretiereinrichtung ein einstückiges Spritzgußteil aus Kunststoff sind.

Weitere vorteilhafte Weiterbildungen der vorliegenden Erfindung sind den Unteransprüchen zu entnehmen.

Weitere Vorteile, vorteilhafte Weiterbildungen und Anwendungsmöglichkeiten der vorliegenden Erfindung sind aus der nachfolgenden Beschreibung einer bevorzugten Ausführungsform der Erfindung in Verbindung mit den beiliegenden Zeichnungen ersichtlich. Es zeigen:
Figur 1 eine perspektivische Ansicht einer bevorzugten Ausführungsform der Erfindung im montierten Zustand, losgelöst von einer Abdeckung;
Figur 2 eine weitere perspektivische Ansicht der Ausführungsform der vorliegenden Erfindung gemäß Figur 1;
Figur 3 eine Ansicht der Ausführungsform der vorliegenden Erfindung gemäß den Figuren 1 und 2 in Richtung des Pfeiles III. der Figur 2 gesehen;
Figur 4 eine Schnittansicht entlang der Schnittlinie A-A der Figur 3 der montierten Verschlußvorrichtung der Erfindung gemäß den Figuren 1 bis 3 an einer Abdeckung montiert, wobei die erfindungsgemäße Verschlußvorrichtung an einer Halterung einer Basis, z.B. eines Verkleidungsteils, das nur teilweise gezeigt ist, arretiert ist;
Figur 5 eine Schnittansicht der erfindungsgemäßen Verschlußvorrichtung entlang der Schnittlinie A-A der Figur 3 ohne Basis und Abdeckung, wobei die Verschlußvorrichtung im Zustand unmittelbar nach einem möglichen Kunststoff-Spritzformen, vor ihrer Montage an der Abdeckung gezeigt ist; und
Figur 6 eine Schnittansicht der Ausführungsform der erfindungsgemäßen Verschlußvorrichtung entlang der Schnittlinie B-B der Figur 3 mit teilweise geschnittener Abdeckung.

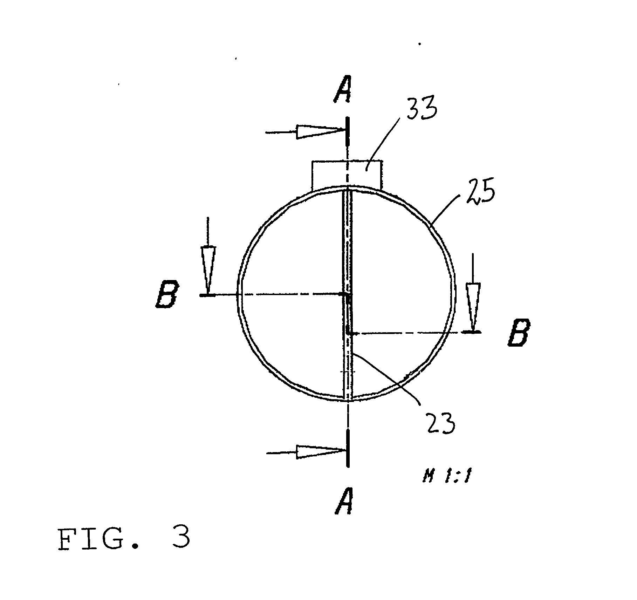

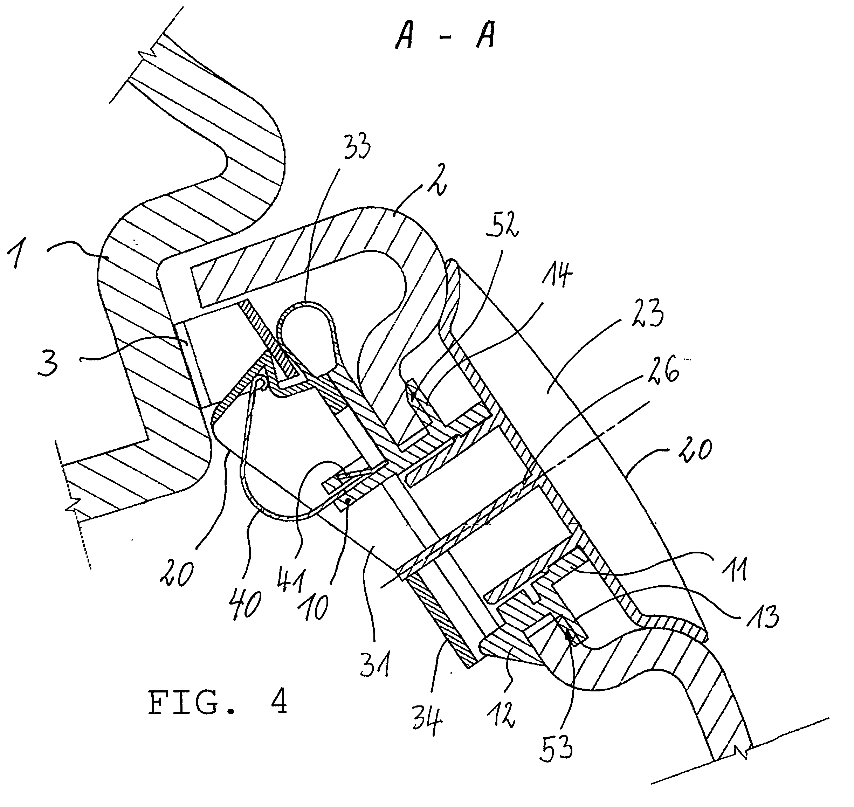

In der Figur 4 ist ein Querschnitt der bevorzugten Ausführungsform der erfindungsgemäßen Verschlußvorrichtung entlang der Schnittlinie A-A der Figur 3 gezeigt, wobei die Verschlußvorrichtung an einer Abdeckung 2, beispielsweise einer Klappe oder einem Deckel, montiert ist und in einer Halterung 3 an einer Basis 1, z.B. der Verkleidung eines Kraftfahrzeugs, arretiert ist, um die Abdeckung 2 an der Basis 1 zu sichern. Die Abdeckung 2 und die Basis 1 sind in der Figur 4 nur teilweise im Querschnitt gezeigt.

Die erfindungsgemäße Verschlußvorrichtung umfaßt eine Anbringungseinrichtung 10 zur Halterung der Verschlußeinrichtung an der Abdeckung 2, eine Arretiereinrichtung 30 zum Arretieren der Verschlußvorrichtung an der Halterung 3 der Basis 1, eine Stelleinrichtung 20, die an der Anbringungseinrichtung 10 beweglich angebracht ist und mit der Arretiereinrichtung 30 gekoppelt ist, um die Arretiereinrichtung 30 in eine Arretierposition zu bewegen, in der die Verschlußvorrichtung an der Halterung 3 arretiert oder gesichert ist, und um die Arretiereinrichtung 30 aus der Arretierposition heraus in eine Freigabeposition zu bewegen, in der die Abdeckung 2 geöffnet werden kann. Weiterhin umfaßt die Verschlußvorrichtung eine Feder 40, die mit der Anbringungseinrichtung 10 und der Arretiereinrichtung 30 gekoppelt ist, und die Arretiereinrichtung 30 in Richtung der Halterung 3 der Basis 1 vorspannt.

Die Anbringungseinrichtung 10 umfaßt ein relativ dünnwandiges Tragteil 11 mit rechteckigem Umriß, dessen Wände teilweise durchbrochen sind. Im Innern hat das Tragteil 11 einen durchgehenden zylindrischen Hohlraum 9. An einer seiner Schmalseiten hat das Tragteil 11 eine Rastnase 12 und mit Abstand zur Rastnase 12 einen Vorsprung 13. An der gegenüber liegenden Schmalseite des Tragteils 11 ist ein weiterer von dieser Schmalseite senkrecht abstehender Vorsprung 14 auf gleicher Höhe wie der Vorsprung 13 ausgebildet. Mit Abstand zum Vorsprung 14 ist an dieser Schmalseite des Tragteils 11 ein weiterer Vorsprung 15 ausgebildet, der sich parallel zum Vorsprung 14 erstreckt. Gegenüberliegend zur Rastnase 12 hat das Tragteil 11 einen Federlager-Vorsprung 17, der für die Aufnahme und Halterung eines Endes der Feder 40 ausgebildet ist.

Die Stelleinrichtung 20 umfaßt eine Scheibe 24 mit kreisförmigen Umriß an deren Unterseite, ein rohrförmiger Stutzen rechtwinklig zur Unterseite absteht. An der Außenseite des Stutzens 22 erstreckt sich ein hervorstehender, umlaufender Rastring 27. Von der Unterseite der Scheibe 24 steht ein Stellglied 26 senkrecht ab, das sich zentral im rohrförmigen Stutzen 22 erstreckt und aus dem Stutzen 22 hervorragt. Das Stellglied 26 hat einen rechtwinkligen Umriß und ist blattförmig. An der Oberseite der Scheibe 24 ist ein Griff 23 zur manuellen Betätigung der Stelleinrichtung 20 ausgebildet. Die Scheibe 24 hat einen Scheibenrand 25, der nach außen weggebogen ist.

Die Arretiereinrichtung 30 umfaßt einen im wesentlichen keilförmigen Schieber 31 dessen eines Ende als Schieberrastnase 32 ausgebildet ist, und dessen anderes Ende als rechtwinkliger Schieberanschlag 34 ausgebildet ist. Der rechtwinklige Schieberanschlag 34 erstreckt sich rechtwinklig zwischen zwei, parallel sich zueinander erstreckenden Seitenwänden, die jeweils einen keilförmigen Umriß haben und den Schieberanschlag 34 mit der Schieberrastnase 32 verbinden. Die beiden Seitenwände und die Schieberrastnase 32 definieren bzw. umschließen einen Hohlraum, in den das Stellglied 26 der Stelleinrichtung 20 und der Federlagervorsprung 17 der Anbringungseinrichtung 10 hinein stehen, wenn die erfindungsgemäße Verschlußvorrichtung an der Abdeckung 2 montiert ist.

An den beiden Seitenwänden des Schiebers 31 erstrecken sich gegenüber liegend Führungsvorsprünge 35, 36, die jeweils einen rechtwinkligen Querschnitt haben und auf der Unterseite des Tragteils 11 aufliegen und als Rastflächen für die Längsrastnasen 5, 6, 7 und 8 des Tragteils 11 der Anbringungseinrichtung 10 dienen. Zwischen dem freien Ende des Vorsprungs 15 des Tragteils 11 und dem Ende des Schiebers 31, etwas von der Spitze der Schieberrastnase 32 entfernt, erstreckt sich ein Filmscharnier 33 aus Kunststoff, das die Anbringungseinrichtung 10 mit der Arretiereinrichtung 30 flexibel verbindet. Alternativ ist die Führung linear am Grundteil angeordnet. Die Rastnasen sind rechts und links auf der ganzen Länge am Schieber (Umkehrprinzip) gebildet.

Die metallene Feder 40 ist eine Blattfeder, die an einem Ende umgebogen sein kann und am anderen Ende ein aufgebogenes Sperrteil 41 hat. Im montierten Zustand sitzt die Feder 40 mit ihrem gebogenen Ende im Inneren der Schieberrastnase 32 ein, nämlich dem SchieberFederlager 37, während sie mit dem Sperrteil 41 an ihrem anderen Ende in einer Aufnahme des Federlagervorsprungs 17 der Anbringungseinrichtung 10 eingerastet ist. Die Feder 40 erstreckt sich im wesentlichen innerhalb des Hohlraums bzw. freien Raums des Schiebers 31 und drückt in dem Figur 4 gezeigten gespannten Zustand den Schieber 31 in die Halterung 3 an der Basis 1, bis der Schieberanschlag 34 am Stellglied 26 anstößt.

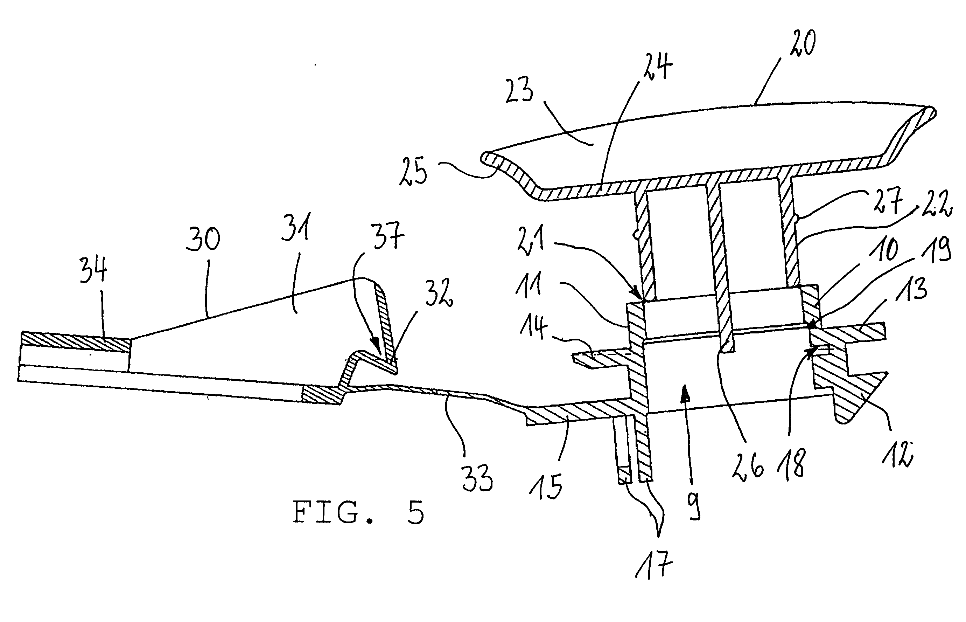

In der Figur 5 ist die unmontierte Verschlußvorrichtung ohne Feder als einstückiges Spritzgußteil aus Kunststoff, betreffend die Anbringungseinrichtung 10, die Stelleinrichtung 20 und die Arretiereinrichtung 30, gezeigt. Wie in der Figur 5 gezeigt ist, ist der Stutzen 22 der Stelleinrichtung 20 nach dem Spritzguß vollständig außerhalb des Hohlraums 9 des Tragteils 11. Das freie Ende des Stutzens 22 ist in seinem äußeren Eckbereich mit einem dünnen Filmscharnier 21 mit dem benachbarten Eckbereich des Tragteils 11 verbunden.

Die einstückig gespritzte Verschlußvorrichtung - wie gesagt ohne die Feder 40- besteht aus Kunststoff, z.B. Polypropylen.

Zur Montage der Verschlußvorrichtung, wie sie in der Figur 5 gezeigt ist, an der Abdeckung 2 wird zuerst die Arretiereinrichtung 30 von der Außenseite der Abdeckung 2 her durch eine Öffnung 50 der Abdeckung 2 hindurchgeführt. Anschließend wird die Anbringungseinrichtung 10 in die Öffnung 50 der Abdeckung 2 eingesetzt. Dabei wird das Tragteil 11 der Anbringungseinrichtung 10 zunächst schiefwinklig mit den Vorsprüngen 14 und 15 an dem entsprechenden Kantenbereich der Öffnung 50 der Abdeckung 2 angesetzt, wobei der Vorsprung 14, der an seinem freien Ende rampenförmig im Querschnitt verjüngt ist, in eine im Kantenbereich der Öffnung 50, außenseitig an der Oberfläche der Abdeckung 2 ausgebildeten Aussparung 52 zumindest für ein Stück eingreift. Die Rastnase 12 liegt nun auf der Kante der Öffnung 50 der Abdeckung 2 auf. Durch Ausüben von manuellem Druck auf das Tragteil 11 wird nun ein Einrasten der Rastnase 12 am anstoßenden Kantenbereich der Öffnung 50 erreicht. Nach dem Einrasten der Rastnase 12 wird der anstoßende Kantenbereich der Öffnung 50 zwischen der Rastnase 12 und dem Vorsprung 13 des Tragteils 11 umfaßt, wobei der Vorsprung 13 in eine entsprechende, im Kantenbereich oberflächig ausgebildete Aussparung 53 eingreift. Gegenüber liegend wird der Kantenbereich der Öffnung 50 von den Vorsprüngen 14 und 15 umfaßt. Da der Umriß der Aussparung 52 zu dem Umriß des Vorsprungs 14 paßt und da der Umriß der gegenüber liegenden Aussparung 53 zu dem Vorsprung 13 paßt, ist das Tragteil 11 und damit die Anbringungseinrichtung 10 unbeweglich bzw. fix an der Abdeckung 2 gehaltert. Die Kerbe 18 an der Innenseite des Tragteils 11 dient dazu, eine für das einrasten der Rastnase 12 ausreichende Auslenkung der Rastnase 12 zu ermöglichen.

Nach Einrasten der Anbringungseinrichtung 10 an der Abdeckung 2 wird nun auf die Scheibe 24 der Stelleinrichtung 20 Druck ausgeübt, wodurch das Filmscharnier 21, das die Stelleinrichtung 20 mit Anbringungseinrichtung 10 verbindet (vgl. Figur 5) gebrochen und der Stutzen 22 der Stelleinrichtung 20 wird in den an ihn formmäßig angepaßten Hohlraum 9 des Tragteils 11 hinein gedrückt, bis der umlaufende Rastring 27 des Stutzens 22 in die umlaufende Ringnut 19 einrastet und die Scheibe 24 mit ihrer Unterseite an der zugewandten Stirnfläche des Tragteils 11 anschlägt. Ist der Rastring 27 in die Ringnut 19 eingerastet, liegt der nach oben aufgebogene Scheibenrand 25 auf einer der Kontur des Scheibenrands 25 angepaßten Kante einer entsprechend kreisförmig ausgebildeten Absenkung oder Vertiefung 51 der Abdeckung 2 auf und der Scheibenrand 25 fluchtet bei eingerasteter Stelleinrichtung 20 mit der außenseitigen Oberfläche der Abdeckung 2. Eine Auslenkung der Rastnase 12 ist nun durch die Wandung des eingeschobenen Stutzens 22 blockiert.

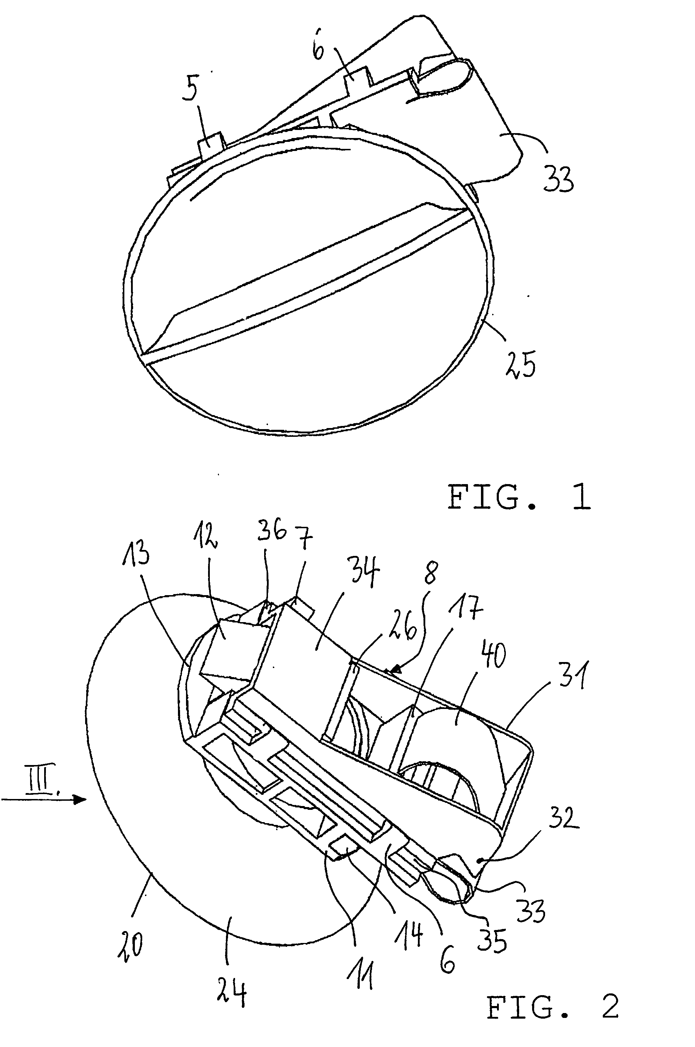

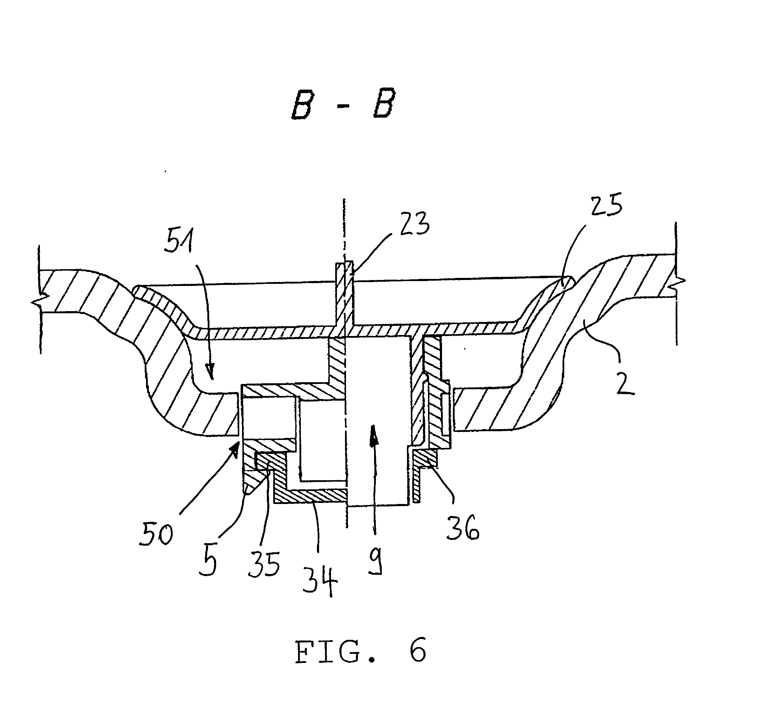

Unter Hilfe des flexiblen Filmscharniers 33 zwischen dem Schieber 31 der Arretiereinrichtung 30 und dem Vorsprung 15 der Anbringungseinrichtung 10 kann nun der Schieber 31 zum Tragteil 11 hin umgeklappt werden, bis der Schieber 31 mit seinen Führungsvorsprüngen 35 und 36 (vgl. Figur 2 und Figur 6) in die Längsrastnase 5, 6, 7 und 8 an der Unterseite des Tragteils 11 einrastet und an diese Unterseite anschlägt. Der Schieber 31 ist nun an der Unterseite durch die Längsrastnasen 5, 6, 7 und 8 verschiebbar gehaltert, deren Rastnasen-Anschlagflächen bei einer translatorischen Verschiebung des Schiebers 31 gegenüber der Anbringungseinrichtung 10 auf den anschlagenden Flächen der Führungsvorsprünge 35 und 36 gleiten. Der Schieber 31 wird nun per Hand in Richtung zu dem Federlagervorsprung 17 des Tragteils 11 geschoben bis der Schieberanschlag 34 an der der Rastnase 12 des Tragteils 11 zugewandten Fläche des Stellglieds 26 flächig anstößt. Die Feder 40 wird nun in den Federlagervorsprung 17 mit ihrem entsprechenden Ende, nämlich dem Sperrteil 41, einrastend eingesetzt, gebogen und mit dem anderen Ende in den spitz zulaufenden Hohlraumbereich der Schieberrastnase 32, nämlich Schieberfederlager 37, eingesetzt. Die so gespannte Feder 40 drückt den Schieber 31 von dem Federlagervorsprung 17 des Tragteils 11 weg. Durch die Federkraft wird somit eine ständige Berührung zwischen dem Stellglied 26 der Stelleinrichtung 20 und dem Schieberanschlag 34 erhalten.

Zum Anbringen bzw. Sichern der Abdeckung 2 mit fertig montierter Verschlußvorrichtung an der Basis 1 wird nun die Abdeckung 2 bezüglich der Basis 1 ausgerichtet und mittels manueller Kraft gegen die Basis 1 gedrückt bzw. fallengelassen, wodurch die Schieberrastnase 32 in der Halterung 3 der Basis 1 einrastet. Durch die vorgespannte Feder 40 ist der Sitz der eingerasteten Schieberrastnase 32 in der Halterung 3 sichergestellt. Soll die Abdekkung 2 von der Basis 1 entfernt werden, z.B. eine Klappe von der Karosserie weg geklappt werden, wird der Griff 23 der Stelleinrichtung 20 betätigt, wodurch die Stelleinrichtung 20 bzw. ihre Scheibe 24 eine Drehbewegung um ihre Zentralachse ausführt. Bei der Drehbewegung ist der Rastring 27 in der Ringnut 19 der unbeweglichen Anbringungseinrichtung 10 geführt und auch der Scheibenrand 25 an der Kante der Abdeckung 2 geführt. Sowohl eine Drehung der Stelleinrichtung 20 im Uhrzeigersinn als auch gegen den Uhrzeigersinn ist möglich. Bei Drehung der Stelleinrichtung 20 schiebt das am Schieberanschlag 34 ansetzende Stellglied 26 den Schieber 31 gegen die Federkraft der Feder 40 zurück, d.h. aus der Halterung 3 heraus, wobei der Schieber 31 eine lineare bzw. translatorische Bewegung ausführt, die rechtwinklig zu der Zentralachse der Scheibe 24 erfolgt. Das blattförmige Stellglied 26 setzt somit eine Drehbewegung der Stelleinrichtung 20 in eine translatorische, gerade Bewegung des Schiebers 31 um. Der Hubweg des Schiebers 31 ist dabei mindestens so groß, daß die Schieberrastnase 32 ihren Eingriff in die Halterung 3 verlassen kann. Ist der Schieber 31 zurückgezogen kann die Abdeckung 2 von der Basis 1 entfernt werden. Wird nun der Griff der Stelleinrichtung 20 wieder losgelassen schiebt die Feder 40 durch ihre Federkraft den Schieber 31 von der Freigabeposition in die Arretierposition selbsttätig zurück, wodurch eine entsprechende Kraft vom Schieberanschlag 34 auf das Stellglied 26 ausgeübt wird, das mit der nun einsetzenden Verschiebung des Schiebers 31 mitbewegt wird, bis der Schieber 31 wieder in seiner Arretierposition ist und folglich auch die Stelleinrichtung 20 wieder in ihrer Ausgangsposition ist. Bei Loslassen der gedrehten Stelleinrichtung 20 bewirkt somit die Federkraft der Feder 40 sowohl eine selbsttätige Stellbewegung des Schiebers 31 in seine Arretierposition als auch eine selbsttätige Drehbewegung der Stelleinrichtung 20 zurück in ihrer Ausgangsposition.

## Patentansprüche

1. Verschlussvorrichtung zum Sichern einer Abdeckung (2) an einer Basis (1), die aufweist:
- eine Anbringungseinrichtung (10) zum Anbringen der Verschlussvorrichtung an der Abdeckung (2),
- eine bewegbare Arretiereinrichtung (30), die mit der Anbringungseinrichtung (10) gekoppelt ist, zum Sichern der Abdeckung (2) an der Basis in einer Arretierposition, und
- eine Stelleinrichtung (20), die an der Anbringungseinrichtung (10) angebracht und relativ zur Anbringungseinrichtung (10) drehbar ist, mit der Arretiereinrichtung (30) bewegungsmässig gekoppelt ist und, wenn sie gedreht wird, die Arretiereinrichtung (30) bewegt, um die Arretiereinrichtung (30) aus der Arretierposition in eine Freigabeposition zu bewegen, in der die Abdeckung (2) von der Basis (1) entfernt werden kann,
**dadurch gekennzeichnet, dass**
- die Anbringungseinrichtung (10), die Stelleinrichtung (20) und die Arretiereinrichtung (30) als einstückiges Spritzgussteil aus Kunststoff hergestellt werden.

2. Verschlussvorrichtung nach Anspruch 1, **dadurch gekennzeichnet, dass** die Arretiereinrichtung (30) beweglich an der Anbringungseinrichtung (10) angebracht ist.

3. Verschlussvorrichtung nach Anspruch 1 oder Anspruch 2, **dadurch gekennzeichnet, dass** die Arretiereinrichtung (30) eine translatorische Bewegung ausführt.

4. Verschlussvorrichtung nach einem der Ansprüche 1 bis 3, **gekennzeichnet durch** eine Feder (40), die die Arretiereinrichtung (30) mit einer Federkraft beaufschlagt.

5. Verschlussvorrichtung nach Anspruch 4, **dadurch gekennzeichnet, dass** die Feder (40) die Arretiereinrichtung in der Arretierposition festhält.

6. Verschlussvorrichtung nach Anspruch 4 oder Anspruch 5, **dadurch gekennzeichnet, dass** die Feder (40) die Arretiereinrichtung selbsttätig von der Freigabeposition in die Arretierposition drängt.

7. Verschlussvorrichtung nach einem der Ansprüche 4 bis 6, **dadurch gekennzeichnet, dass** die Stelleinrichtung (20) die Drehbewegung der Anbringungseinrichtung (10) gegen die Federkraft der Feder (40) auf die Arretiereinrichtung (30) überträgt, um die Arretiereinrichtung aus der Arretierposition in die Freigabeposition zu bewegen.

8. Verschlussvorrichtung nach einem der Ansprüche 1 bis 7, **dadurch gekennzeichnet, dass** die Arretiereinrichtung (30) eine Rastnase (32) hat, die an der Basis (1) einrastbar ist.

9. Verschlussvorrichtung nach einem der Ansprüche 1 bis 8, **dadurch gekennzeichnet, dass** die Arretiereinrichtung (30) eine Öffnung hat, in die das Stellglied (26) der Stelleinrichtung eingreift und dass die Öffnung sich in Richtung der translatorischen Bewegung der Arretiereinrichtung für eine Länge erstreckt, die dem maximalen Bewegungshub der Arretiereinrichtung entspricht.

10. Verschlussvorrichtung nach einem der Ansprüche 1 bis 9, **dadurch gekennzeichnet, dass** die Stelleinrichtung (20) nach dem Spritzguss mittels eines Filmscharniers (21) mit der Anbringungseinrichtung (10) verbunden ist.

11. Verschlussvorrichtung nach einem der Ansprüche 1 bis 10, **dadurch gekennzeichnet, dass** die Arretiereinrichtung (30) mit der Anbringungseinrichtung (10) mittels eines flexiblen Verbindungsmittels verbunden ist.

12. Verschlussvorrichtung nach Anspruch 11, **dadurch gekennzeichnet, dass** das Verbindungsmittel ein Filmscharnier (33) aus Kunststoff ist.

13. Verschlussvorrichtung nach einem der Ansprüche 1 bis 12, **dadurch gekennzeichnet, dass** die Rastnase (12) der Anbringungseinrichtung nach dem Einrasten an der Abdeckung durch ein Sperrteil derart arretiert ist, dass eine Auslenkung der Rastnase (12) verhindert wird, damit die Anbringungseinrichtung nicht mehr entfernt werden kann.

14. System mit einer Abdeckung, insbesondere einer Klappe oder einem Deckel zur Verwendung in einem Kraftfahrzeug, und mindestens einer Verschlussvorrichtung nach einem der Ansprüche 1 bis 13, wobei die Abdeckung mindestens eine Öffnung (50) zum Anbringen zumindest einer Verschlussvorrichtung hat.

15. System nach Anspruch 14, **dadurch gekennzeichnet, dass** die Anbringungseinrichtung (10) in die Öffnung (50) eingesetzt ist und am Randbereich der Öffnung unbeweglich verrastet ist.

16. System nach Anspruch 14, **dadurch gekennzeichnet, dass** die Anbringungseinrichtung (10) der Verschlussvorrichtung und die Abdeckung (2) einstückig ausgebildet sind.

17. System nach Anspruch 14, **dadurch gekennzeichnet, dass** die Abdeckung (2), die Anbringungseinrichtung (10), die Stelleinrichtung (20) und die Arretiereinrichtung (30) ein einstückiges Spritzgussteil aus Kunststoff sind.

## Claims

1. Fastening apparatus for securing a cover (2) to a base (1), the said fastening apparatus having:
- an attachment device (10) for attaching the fastening apparatus to the cover (2),
- a movable locking device (30), which is coupled to the attachment device (10), for securing the cover (2) to the base in a locking position, and
- an actuating device (20) which is attached to the attachment device (10) and is rotatable in relation to the attachment device (10) and which is motionally coupled to the locking device (30) and, when the said actuating device is rotated, moves the locking device (30), in order to move the locking device (30) out of the locking position into a release position, in which the cover (2) can be removed from the base (1),
**characterized in that**
- the attachment device (10), the actuating device (20) and the locking device (30) are produced as a one-piece injection moulding from plastic.

2. Fastening apparatus according to Claim 1, **characterized in that** the locking device (30) is attached movably to the attachment device (10).

3. Fastening apparatus according to Claim 1 or Claim 2, **characterized in that** the locking device (30) executes a translational motion.

4. Fastening apparatus according to one of Claims 1 to 3, **characterized by** a spring (40) which acts with a spring force upon the locking device (30).

5. Fastening apparatus according to Claim 4, **characterized in that** the spring (40) retains the locking device in the locking position.

6. Fastening apparatus according to Claim 4 or Claim 5, **characterized in that** the spring (40) automatically urges the locking device from the release position into the locking position.

7. Fastening apparatus according to one of Claims 4 to 6, **characterized in that** the actuating device (20) transmits the rotational motion of the attachment device (10) to the locking device (30) counter to the spring force of the spring (40), in order to move the locking device out of the locking position into the release position.

8. Fastening apparatus according to one of Claims 1 to 7, **characterized in that** the locking device (30) has a latching nose (32) which can be latched on the base (1).

9. Fastening apparatus according to one of Claims 1 to 8, **characterized in that** the locking device (30) has an orifice, in which the actuating member (26) of the actuating device engages, and **in that** the orifice extends in the direction of the translational motion of the locking device for a length which corresponds to the maximum motion stroke of the locking device.

10. Fastening apparatus according to one of Claims 1 to 9, **characterized in that**, after the injection-moulding, the actuating device (20) is connected to the attachment device (10) by means of a film hinge (21).

11. Fastening apparatus according to one of Claims 1 to 10, **characterized in that** the locking device (30) is connected to the attachment device (10) by a flexible connection means.

12. Fastening apparatus according to Claim 11, **characterized in that** the connection means is a film hinge (33) made from plastic.

13. Fastening apparatus according to one of Claims 1 to 12, **characterized in that** the latching nose (12) of the attachment device, after being latched on the cover, is locked by means of a blocking part in such a way that a deflection of the latching nose (12) is prevented, so that the attachment device can no longer be removed.

14. System with a cover, in particular a flap or a lid, for use in a motor vehicle, and with at least one fastening apparatus according to one of Claims 1 to 13, the cover having at least one orifice (50) for the attachment of at least one fastening apparatus.

15. System according to Claim 14, **characterized in that** the attachment device (10) is inserted into the orifice (50) and is latched immovably to the edge region of the orifice.

16. System according to Claim 14, **characterized in that** the attachment device (10) of the fastening apparatus and the cover (2) are produced in one piece.

17. System according to Claim 14, **characterized in that** the cover (2), the attachment device (10), the actuating device (20) and the locking device (30) are a one-piece injection-moulding made from plastic.

## Revendications

1. Dispositif de fermeture pour fixer un recouvrement (2) sur une base (1), lequel dispositif présente :
- un dispositif d'installation (10) pour installer le dispositif de fermeture sur le recouvrement (2),
- un dispositif mobile de blocage (30) qui est accouplé au dispositif d'installation (10) pour bloquer le recouvrement (2) sur la base dans une position de blocage et
- un dispositif de réglage (20) qui est installé sur le dispositif d'installation (10) et qui peut tourner par rapport au dispositif d'installation (10), qui est accouplé à déplacement avec le dispositif de blocage (30) et qui, lorsqu'il est tourné, déplace le dispositif de blocage (30) pour déplacer le dispositif de blocage (30) depuis la position de blocage jusque dans une position de libération dans laquelle le recouvrement (2) peut être enlevé de la base (1),
**caractérisé en ce que**
- le dispositif d'installation (10), le dispositif de réglage (20) et le dispositif de blocage (30) sont réalisés sous la forme d'une seule pièce en matière synthétique moulée par injection.

2. Dispositif de fermeture selon la revendication 1, **caractérisé en ce que** le dispositif de blocage (30) est installé sur le dispositif d'installation (10) de manière à pouvoir s'y déplacer.

3. Dispositif de fermeture selon la revendication 1 ou la revendication 2, **caractérisé en ce que** le dispositif de blocage (30) exécute un déplacement de translation.

4. Dispositif de fermeture selon l'une des revendications 1 à 3, **caractérisé par** un ressort (40) qui sollicite le dispositif de blocage (30) par une force élastique.

5. Dispositif de fermeture selon la revendication 4, **caractérisé en ce que** le ressort (40) maintient le dispositif de blocage dans la position de blocage.

6. Dispositif de fermeture selon la revendication 4 ou la revendication 5, **caractérisé en ce que** le ressort (40) repousse automatiquement le dispositif de blocage depuis la position de libération jusque dans la position de blocage.

7. Dispositif de fermeture selon l'une des revendications 4 à 6, **caractérisé en ce que** pour déplacer le dispositif de blocage depuis la position de blocage jusque dans la position de libération, le dispositif de réglage (20) transfère le déplacement de rotation du dispositif d'installation (10) au dispositif de blocage (30) en opposition à la force élastique du ressort (40).

8. Dispositif de fermeture selon l'une des revendications 1 à 7, **caractérisé en ce que** le dispositif de blocage (30) présente un bec d'encliquetage (32) qui peut être encliqueté sur la base (1).

9. Dispositif de fermeture selon l'une des revendications 1 à 8, **caractérisé en ce que** le dispositif de blocage (30) présente une ouverture dans laquelle l'organe de réglage (26) du dispositif de réglage s'engage et **en ce que** l'ouverture s'étend dans la direction du déplacement de translation du dispositif de blocage sur une longueur qui correspond à la course maximale de déplacement du dispositif de blocage.

10. Dispositif de fermeture selon l'une des revendications 1 à 9, **caractérisé en ce qu'**après l'opération de moulage par injection, le dispositif de réglage (20) est relié au dispositif d'installation (10) au moyen d'une charnière en film (21).

11. Dispositif de fermeture selon l'une des revendications 1 à 10, **caractérisé en ce que** le dispositif de blocage (30) est relié au dispositif d'installation (10) à l'aide d'un moyen flexible de liaison.

12. Dispositif de fermeture selon la revendication 11, **caractérisé en ce que** le moyen de liaison est une charnière en film (33) en matière synthétique.

13. Dispositif de fermeture selon l'une des revendications 1 à 12, **caractérisé en ce qu'**après l'encliquetage, le bec d'encliquetage (12) du dispositif d'installation est bloqué sur le recouvrement par une pièce de blocage qui empêche la sortie du bec d'encliquetage (12) pour que le dispositif d'installation ne puisse plus être enlevé.

14. Système doté d'un recouvrement, en particulier un clapet ou un couvercle, destiné à être utilisé dans un véhicule automobile, et d'au moins un dispositif de fermeture selon l'une des revendications 1 à 13, le recouvrement présentant au moins une ouverture (50) qui permet l'installation d'au moins un dispositif de fermeture.

15. Système selon la revendication 14, **caractérisé en ce que** le dispositif d'installation (10) est inséré dans l'ouverture (50) et est immobilisé par encliquetage sur la bordure de l'ouverture.

16. Système selon la revendication 14, **caractérisé en ce que** le dispositif d'installation (10) du dispositif de fermeture et le recouvrement (2) sont réalisés d'une seule pièce.

17. Système selon la revendication 14, **caractérisé en ce que** le recouvrement (2), le dispositif d'installation (10), le dispositif de réglage (20) et le dispositif de blocage (30) forment une seule pièce en matière synthétique moulée par injection.
